# EUROPEAN PATENT APPLICATION

(11) **EP 2 819 220 A1**
(43) Date of publication of application: **31.12.2014**
(21) Application number: 14158319.5
(22) Date of filing: 07.03.2014
(51) Int. Cl.: H01M 4/13, H01M 4/62, H01M 10/0525, H01M 4/04, H01M 4/139

(54) **Secondary battery electrode and lithium-ion secondary battery**

(30) Priority: 26.06.2013 JP 2013134099
(71) Applicant: Kabushiki Kaisha Toshiba, Tokyo 105-8001 (JP)
(72) Inventor: Uematsu, Ikuo, Tokyo, 105-8001 (JP); Sakurai, Naoaki, Tokyo, 105-8001 (JP); Hayamizu, Naoya, Tokyo, 105-8001 (JP)
(74) Representative: Hoffmann Eitle

(57) **Abstract**

According to one embodiment, a secondary battery electrode includes a current collector, and a lyer. The layer is provided on the current collector. The layer includes a plurality of active material bodies and a fiber provided between adjacent active material bodies out of the active material bodies, and connects the adjacent active material bodies to each other.

## Description

### FIELD

Embodiments described herein relate generally to secondary battery electrode and a lithium-ion secondary battery.

### BACKGRO U N D

In a lithium-ion secondary battery, an active material, a conductor, and a binder are made into an application liquid, and the application liquid containing the active material, the conductor, and the binder is applied onto a current collector to form an electrode including the active material, the conductor, the binder sheet, and the current collector.

However, in the electrode, pieces of the active material are aggregated in contact with one another on the current collector. Consequently, it is difficult for lithium ions and electrons to go into and out of the portion where pieces of the active material are in contact with one another. In other words, in the existing lithium-ion secondary battery, the active material may not be utilized with good efficiency, and a sufficient capacity of the battery may not be obtained.

### BRIEF DESCRIPTION OF THE DRAWINGS

FIG. 1 is a schematic cross-sectional view of a lithium-ion secondary battery according to a first embodiment;
FIG. 2 is a schematic cross-sectional view of the lithium-ion secondary battery according to the first embodiment, and is an enlarged view of FIG. 1;
FIG. 3 is a SEM image of an electrode of the lithium-ion secondary battery according to the first embodiment;
FIG. 4 is a schematic cross-sectional view of a lithium-ion secondary battery according to a second embodiment; and
FIG. 5A and FIG. 5B are schematic views showing a method for manufacturing an electrode.

### DETAILED DESCRIPTION

According to one embodiment, a secondary battery electrode includes a current collector, and a lyer. The layer is provided on the current collector. The layer includes a plurality of active material bodies and a fiber provided between adjacent active material bodies out of the active material bodies, and connects the adjacent active material bodies to each other.

Various embodiments will be described hereinafter with reference to the accompanying drawings. In the following description, identical components are marked with the same reference numerals, and a description of components once described is omitted as appropriate.

### First embodiment

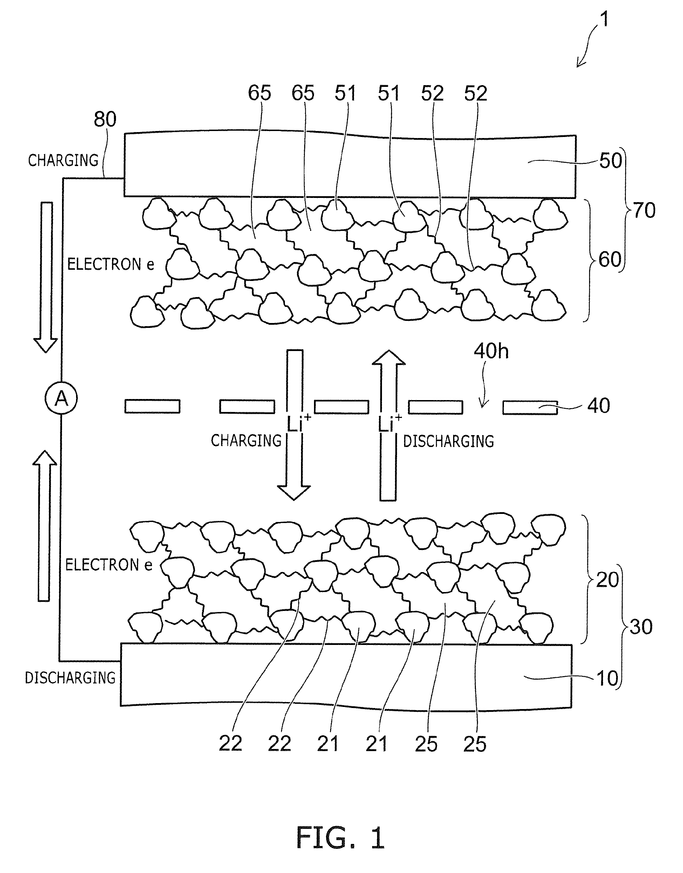

FIG. 1 is a schematic cross-sectional view of a lithium-ion secondary battery according to a first embodiment.

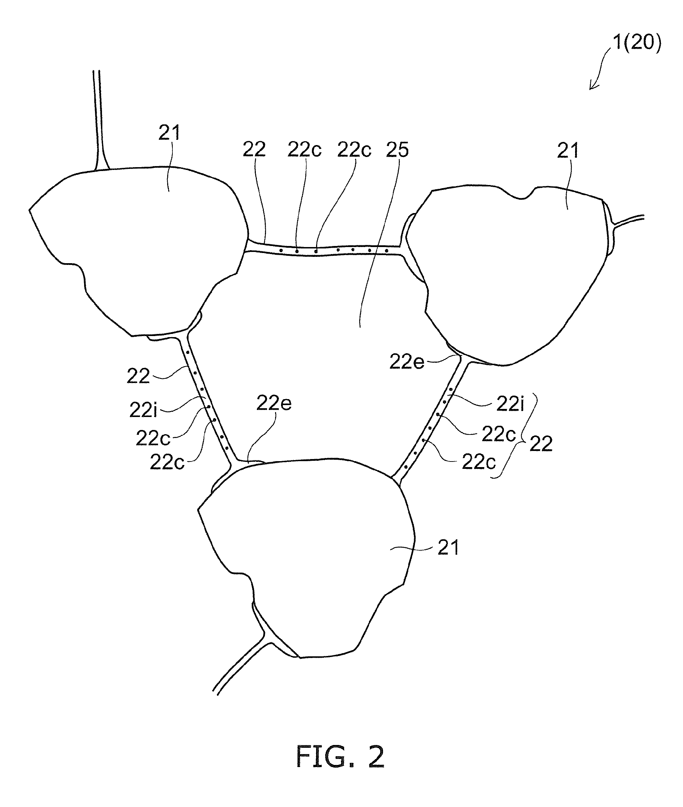

FIG. 2 is a schematic cross-sectional view of the lithium-ion secondary battery according to the first embodiment, and is an enlarged view of FIG. 1.

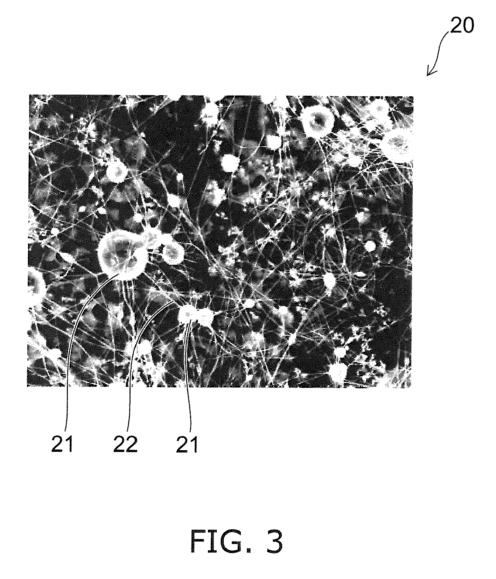

FIG. 3 is a SEM image of an electrode of the lithium-ion secondary battery according to the first embodiment.

FIG. 3 shows a SEM image of an electrode on the negative electrode side as an example.

A lithium-ion secondary battery 1 according to the first embodiment includes a current collector 10 (a first current collector), a first layer 20, and a separator 40. A unit including the current collector 10 and the first layer 20 is taken as a negative electrode 30, for example. Other than these, the lithium-ion secondary battery 1 includes a current collector 50 (a second current collector) and a second layer 60. A unit including the current collector 50 and the second layer 60 is taken as a positive electrode 70, for example. An electrolyte (an electrolytic solution) is provided between the negative electrode 30 and the positive electrode 70. Each of the negative electrode 30 and the positive electrode 70 may be referred to as a secondary battery electrode.

The current collector 10 is a metal plate in a flat shape. The thickness of the current collector 10 is 40 µm (micrometers) or less, for example.

The first layer 20 is provided on the current collector 10. The thickness of the first layer 20 is 50 µm or less, for example. The first layer 20 includes a plurality of active material bodies 21 (first active material bodies) and fibers 22 (first fibers). The fiber 22 is provided between adjacent active material bodies 21 out of the plurality of active material bodies 21. The active material body 21 may be referred to as a negative electrode active material body 21.

The average particle size of the active material body 21 is 10 µm or less, for example. Here, the average particle size in the embodiment is defined by the volume average particle size, for example. Adjacent active material bodies 21 are connected together by the fiber 22. There is a space 25 between adjacent active material bodies 21. In order to make stronger the connection of active material bodies 21 by the fiber 22, as shown in FIG. 2 part of the surface of one of the adjacent active material bodies 21 may be covered with an end 22e of the fiber 22 connected to the one of the adjacent active material bodies 21.

The fiber 22 is a binder connecting adjacent ones of the plurality of active material bodies 21, and has electrical conductivity. The fiber 22 includes an insulating material 22i and a conductive body 22c. The conductive body 22c is an electrically conductive particle, for example. In the fiber 22, conductive bodies 22c are dispersed in the insulating material 22i, for example. The line width of the fiber 22 is 1 µm or less. By such a fiber 22 having electrical conductivity being provided between adjacent ones of the plurality of active material bodies 21, lithium ions (Li⁺) or electrons can circulate around to the active material bodies 21 uniformly.

In the lithium-ion secondary battery 1, the positive electrode 70 faces the negative electrode 30 across the separator 40. The current collector 50 is a metal plate in a flat shape. The thickness of the current collector 50 is 40 µm (micrometers) or less, for example.

The second layer 60 is provided on the current collector 50. The thickness of the second layer 60 is 200 µm or less, for example. The second layer 60 includes a plurality of active material bodies 61 (second active material bodies) and fibers 62 (second fibers). The fiber 62 is provided between adjacent active material bodies 61 out of the plurality of active material bodies 61. There is a space 65 between adjacent active material bodies 61. The active material body 61 may be referred to as a positive electrode active material body 61.

The average particle size of the active material body 61 is 10 µm or less, for example. Adjacent active material bodies 61 are connected to each other by the fiber 62. Similarly to the structure shown in FIG. 2, part of the surface of one of the adjacent active material bodies 61 is covered with an end of the fiber 62 connected to the one of the adjacent active material bodies 61.

The fiber 62 is a binder connecting adjacent ones of the plurality of active material bodies 61, and has electrical conductivity. The fiber 62 includes an insulating material and a conductive body. The conductive body is an electrically conductive particle, for example. In the fiber 62, conductive bodies are dispersed in the insulating material, for example. The line width of the fiber 62 is 1 µm or less. By such a fiber 62 having electrical conductivity being provided between adjacent ones of the plurality of active material bodies 61, lithium ions (Li⁺) or electrons can circulate around to the active material bodies 61 uniformly.

In the lithium-ion secondary battery 1, the separator 40 is provided between the negative electrode 30 and the positive electrode 70. By the separator 40 being provided, an electrical short circuit between the negative electrode 30 and the positive electrode 70 is prevented. A plurality of holes 40h that allow lithium ions (Li⁺) to pass through them are provided in the separator 40. Lithium ions (Li⁺) can move from the negative electrode side to the positive electrode side or from the positive electrode side to the negative electrode side through the hole 40h.

The first layer 20 and the second layer 60 are formed by the electrospinning method (ES method) (described later).

The material of the current collectors 10 and 50 is aluminum (Al), an aluminum alloy, or copper (Cu). The aluminum alloy contains at least one metal component selected from the group consisting of magnesium (Mg), manganese (Mn), chromium (Cr), zinc (Zn), silicon (Si), iron (Fe), and nickel (Ni).

As the material of the active material body (negative electrode active material) 21, a metal oxide, a metal sulfide, a metal nitride, an alloy, and the like are given, for example.

As the metal oxide, tungsten oxide such as WO₃, amorphous tin oxide such as SnB_{0.4}P_{0.6}O_{3.1}, tin silicon oxide such as SnSiO₃, silicon oxide such as SiO, lithium titanate of the spinel structure such as Li₄₊ₓTi₅O₁₂, and the like are given, for example.

The metal oxide is lithium titanium oxide (lithium titanium composite oxide) such as lithium titanate, for example. The metal sulfide is lithium sulfide such as TiS₂, molybdenum sulfide such as MoS₂, or iron sulfide such as FeS, FeS₂, and LiₓFeS₂, for example. The metal nitride is lithium cobalt nitride such as LiₓCo_{y}N (0 < x < 4, 0 < y < 0.5) or the like, for example. Lithium titanate is preferable in terms of cycle performance. This is because lithium titanate has a lithium occlusion potential of approximately 1.5 V and is an electrochemically stable material with respect to an aluminum foil current collector or an aluminum alloy foil current collector. Other than these, lithium carbide (LiC₆) and the like may be used.

As the material of the active material body (positive electrode active material) 61, an oxide, a sulfide, a polymer, etc. are given.

As the oxide, manganese dioxide (MnO₂), iron oxide, copper oxide, nickel oxide, lithium manganese composite oxide such as LiₓMn₂O₄ and LiₓMnO₂, lithium nickel composite oxide such as LiₓNiO₂, lithium cobalt composite oxide such as LiₓCoO₂, lithium nickel cobalt composite oxide such as LiNi_{1-y}Co_{y}O₂, lithium manganese cobalt composite oxide such as LiMn_{y}Co_{1-y}O₂, lithium manganese nickel composite oxide of the spinel structure such as LiₓMn_{2-y}Ni_{y}O₄, lithium phosphorus oxide having the olivine structure such as LiₓFePO₄, LiₓFe_{1-y}Mn_{y}PO₄, and LiₓCoPO₄, iron sulfate such as Fe₂(SO₄)₃, vanadium oxide such as V₂O₅, and the like are given, for example. x and y are each in a range of 0 to 1.

As the polymer, an electrically conductive polymer material such as polyaniline and polypyrrole, a disulfide-based polymer material, and the like are given. Other than these, sulfur (S), carbon fluoride (CF), and the like may be used.

As the material of the conductive body, acetylene black, carbon black, coke, carbon fiber, graphite, and the like are given.

As the material of the fibers 22 and 62, a material having insulating properties and flexibility is selected. The material of the fibers 22 and 62 contains at least one of a polyamideimide (PAI), polytetrafluoroethylene (PTFE), and polyvinylidene fluoride (PVdF), for example.

As the material of the separator 40, nonwoven fabric made of synthetic resin, a polyethylene porous film, a polypropylene porous film, and the like are given.

As the electrolytic solution, a non-aqueous electrolyte is used. As the non-aqueous electrolyte, a liquid non-aqueous electrolyte prepared by dissolving an electrolyte in an organic solvent, a gel-like non-aqueous electrolyte in which a liquid electrolyte and a polymer material are composited together, or a solid non-aqueous electrolyte in which a lithium salt electrolyte and a polymer material are composited together is given. Also an ambient temperature molten salt (an ionic melt) containing lithium ions may be used as the non-aqueous electrolyte.

As the electrolyte, LiBF₄, LiPF₆, LiAsF₆, LiClO₄, LiCF₃SO₃, LiN(CF₃SO₂)₂, LiN(C₂F₅SO₂)₂, Li(CF₃SO₂)₃C, LiB[(OCO)₂]₂, and the like are given, for example. The number of types of the electrolyte used may be one, or two or more.

As the organic solvent, a cyclic carbonate such as propylene carbonate (PC) and ethylene carbonate (EC), a chain carbonate such as diethyl carbonate (DEC), dimethyl carbonate (DMC), and methyl ethyl carbonate (MEC), a chain ether such as dimethoxyethane (DME) and diethoethane (DEE), a cyclic ether such as tetrahydrofuran (THF) and dioxolane (DOX), γ-butyrolactone (GBL), acetonitrile (AN), sulfolane (SL), and the like are given, for example. These organic solvents may be used in a form of one type or a mixture of two or more types.

As the polymer material, polyvinylidene fluoride (PVdF), polyacrylonitrile (PAN), polyethylene oxide (PEO), and the like are given, for example.

Although FIG. 1 illustrates one set of the negative electrode 30, the positive electrode 70, and the separator 40, the embodiment is not limited to this example. For example, a set of the negative electrode 30, the positive electrode 70, and the separator 40 may be stacked in plural; or the negative electrode 30 and the positive electrode 70 may be alternately arranged and the separator 40 may be provided between the negative electrode 30 and the positive electrode 70.

Operations of the lithium-ion secondary battery 1 will now be described.

As shown in FIG. 1, when the lithium-ion secondary battery 1 is charged, a negative potential (or the ground potential) is applied to the positive electrode 70, and a positive potential is applied to the negative electrode 30. During charging, lithium ions (Li⁺) are released from the active material body 61 on the positive electrode 70 side, and move to the negative electrode 30 side. At this time, electrons (e⁻) released from lithium flow to the negative electrode 30 side through a current path 80. The lithium ion (Li⁺) binds to the active material body 21 on the negative electrode 30 side.

On the other hand, when the lithium-ion secondary battery 1 is discharged, lithium ions (Li⁺) are released from the active material body 21 on the negative electrode 30 side, and move to the positive electrode 70 side. At this time, electrons (e⁻) released from lithium flow to the positive electrode 70 side through the current path 80. The lithium ion (Li⁺) binds to the active material body 61 on the positive electrode 70 side.

In the lithium-ion secondary battery 1, the first layer 20 has a network structure including the active material body 21 and the fiber 22. For example, on the negative electrode 30 side, a plurality of active material bodies 21 are connected three-dimensionally by fibers 22. That is, in the lithium-ion secondary battery 1, each of the plurality of active material bodies 21 is separated via the fiber 22, and the area of the exposed surface of each of the plurality of active material bodies 21 is increased greatly. The fiber 22 has a function as a binder, and has electrical conductivity.

Thus, by the increase in the area of the surface exposed to the electrolyte of each individual active material body 21, the area where lithium ions (Li⁺) can go into and out of the active material body 21 is increased. There is a gap between adjacent ones of the plurality of fibers 22. By the gap, during charging and discharging, lithium ions (Li⁺) can pass through the gap between adjacent ones of the plurality of fibers 22 with good efficiency.

Thereby, in the lithium-ion secondary battery 1, the capacity of the battery is increased greatly. Here, the capacity of the battery is the electric quantity discharged from when the battery starts being used to when the use is finished. Also the output of the lithium-ion secondary battery is increased greatly.

As the exposed area of the active material bodies 21 and 61 decreases, the area of the place on the active material body where lithium ions (Li⁺) do not arrive increases. In such a place, a defect that does not function as the active material may occur. In the first embodiment, the exposed area of the active material bodies 21 and 61 is increased to avoid the occurrence of such a defect.

Also on the positive electrode 70 side, since the second layer 60 has the same structure as the first layer 20, the same effect as the negative electrode 30 side is obtained.

### Second embodiment

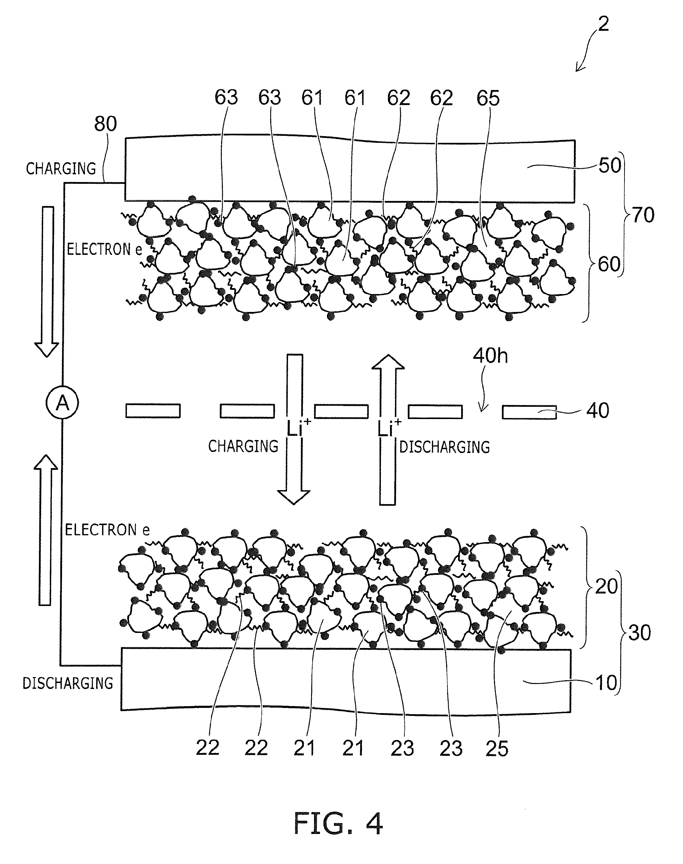

FIG. 4 is a schematic cross-sectional view of a lithium-ion secondary battery according to a second embodiment.

In a lithium-ion secondary battery 2 according to the second embodiment, high-pressure press processing is performed on the first layer 20 and the second layer 60, for example. In the first layer 20 and the second layer 60 according to the second embodiment, the volume of the spaces 25 and 65 is reduced as compared to the first layer 20 and the second layer 60 according to the first embodiment.

The volume of the spaces 25 and 65 is reduced by once immersing the first layer 20 and the second layer 60 in an electrolytic solution and then performing high-pressure press processing, for example. After the high-pressure press, the electrolyte remains between adjacent active material bodies 21 and between adjacent active material bodies 61.

In the second embodiment, conductive bodies are not dispersed in the fibers 22 and 62. In the second embodiment, a conductive body is loaded on at least one of the active material body 21 and the active material body 61. In other words, the first layer 20 includes conductive bodies 23. Alternatively, the second layer 60 includes conductive bodies 63.

In the second embodiment, by reducing the volume of the spaces 25 and 65, the density of active material bodies of the first layer 20 and the second layer 60 is increased. Thereby, the area where lithium ions (Li⁺) can go into and out of the active material body 21 is further increased. Consequently, in the lithium-ion secondary battery 2, the capacity and the output of the battery are further increased.

### Third embodiment

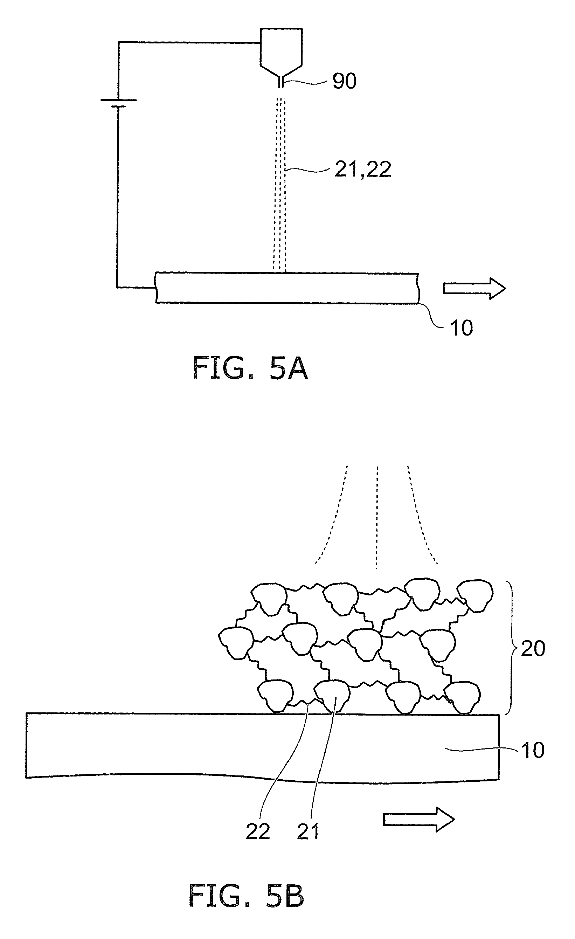

FIG. 5A and FIG. 5B are schematic views showing a method for manufacturing an electrode. FIG. 5A and FIG. 5B illustrate the negative electrode side. FIG. 5B is an enlarged view near the current collector 10.

The first layer 20 is formed on the current collector 10 by the ES method. As shown in FIG. 5A, active material bodies 21 and fibers 22 (or a material that forms the fiber 22) are put in a nozzle 90, for example. The active material bodies 21 and the fibers 22 (or the material thereof) are dispersed in a solvent in the nozzle 90.

Next, a high voltage (for example, several thousand volts) is applied between the nozzle 90 and the current collector 10. By the strong electric field between the nozzle 90 and the current collector 10, the active material body 21 and the fiber 22 (or the material thereof) are jetted from the nozzle 90, and the active material body 21 and the fiber 22 charged with a positive potential are accelerated toward the current collector 10 charged with a negative potential. While the active material body 21 and the fiber 22 are flying, the solvent vaporizes from the active material body 21 and the fiber 22.

After that, the active material body 21 and the fiber 22 provided with high energy by being accelerated by the high electric field adhere to the current collector 10. Thereby, the first layer 20 is formed on the current collector 10. After the first layer 20 is formed up to a desired thickness, the current collector 10 is slid in the direction of the arrow to form the first layer 20 over a large area of the current collector 10. Also the second layer 60 is formed by a similar method.

In the second embodiment, after that the first layer 20 and the second layer 60 are immersed in an electrolytic solution, and then high pressure press processing is performed on the first layer 20 and the second layer 60.

Although the embodiments are described above with reference to the specific examples, the embodiments are not limited to these specific examples. That is, design modification appropriately made by a person skilled in the art in regard to the embodiments is within the scope of the embodiments to the extent that the features of the embodiments are included. Components and the disposition, the material, the condition, the shape, and the size or the like included in the specific examples are not limited to illustrations and can be changed appropriately.

"On" in "regio A is provided on regio B" means the case where the region A contacts the region B and the region A is provided on the region B and the case where the region A does not contact the region B and the region A is provided above the region B. When a stacking order of the regio A and the region B is inversed, the situation is "the region A is provided below the region B", however also in this case, the expression "the region A is provided on the region B" may be used. This is because of invariance of the stacked structure before and after the inversion in spite of inverting the stacking order of the regio A and the regio B.

The components included in the embodiments described above can be combined to the extent of technical feasibility and the combinations are included in the scope of the embodiments to the extent that the feature of the embodiments is included. Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A secondary battery electrode comprising:
a current collector (10); and
a layer (20) provided on the current collector (10), the layer (20) including a plurality of active material bodies (21) and a fiber (22) provided between adjacent active material bodies (21) out of the active material bodies (21) and connecting the adjacent active material bodies (21) to each other.

2. The electrode according to claim 1, wherein at least a part of a surface of one of the adjacent active material bodies (21) is covered with an end (22e) of the fiber (22) connected to the one of the adjacent active material bodies (21).

3. The electrode according to any of claims 1 and 2, wherein the fiber (22) includes an insulating material (22i) and a conductive body (22c).

4. The electrode according to any of claims 1 and 2, wherein the layer (20) further includes a conductive body (23).

5. The electrode according to any of claims 1-4, wherein a line width of the fiber (22) is 1 micrometer or less.

6. A lithium-ion secondary battery comprising:
a first current collector (10);
a first layer (20) provided on the first current collector (10), the first layer (20) including a plurality of first active material bodies (21) and a first fiber (22) provided between adjacent first active material bodies (21) out of the first active material bodies (21) and connecting the adjacent first active material bodies (21) to each other;
a second current collector (50); and
a second layer (60) provided on the second current collector (50), the second layer (60) including a plurality of second active material bodies (61) and a second fiber (62) provided between adjacent second active material bodies (61) out of the second active material bodies (61) and connecting the adjacent second active material bodies (61) to each other.

7. The battery according to claim 6, wherein
at least a part of a surface of one of the adjacent first active material bodies (21) is covered with a first end of the first fiber (22) connected to the one of the adjacent first active material bodies (21) and
at least a part of a surface of one of the adjacent second active material bodies (61) is covered with a second end of the second fiber (62) connected to the one of the adjacent second active material bodies (61).

8. The battery according to any of claims 6 and 7, wherein at least one of the first fiber (22) and the second fiber (62) includes an insulating material and a conductive body.

9. The battery according to any of claims 6 and 7, wherein at least one of the first layer (20) and the second layer (60) further includes a conductive body.

10. The battery according to any of claims 6-9, wherein a line width of each of the first fiber (22) and the second fiber (62) is 1 micrometer or less.
